# FASCICULE DE BREVET EUROPEEN

(11) **EP 3 947 938 B1**
(45) Date de publication et mention de la délivrance du brevet: **14.02.2024**
(21) Numéro de dépôt: 20723993.0
(22) Date de dépôt: 26.03.2020
(51) Int. Cl.: F02C 7/14, F02C 7/18, F02K 1/72, F28F 9/26

(54) **SYSTÈME DE REFROIDISSEMENT DE TURBORÉACTEUR POUR AÉRONEF**
KÜHLSYSTEM FÜR EIN FLUGTRIEBWERK
SYSTEM FOR COOLING AN AIRCRAFT TURBOJET ENGINE

(30) Priorité: 03.04.2019 FR 1903545
(43) Date de publication de la demande: 09.02.2022
(73) Titulaire: Safran Nacelles, 76700 Gonfreville-l'Orcher (FR)
(72) Inventeur: CORBIN, Julien, 77550 MOISSY CRAMAYEL (FR); BOUCHOUT, Jean-Nicolas, 77550 MOISSY CRAMAYEL (FR); DANG, Caroline, 77550 MOISSY CRAMAYEL (FR)
(74) Mandataire: Germain Maureau
(86) Numéro de dépôt international: PCT/EP2020/058632
(87) Numéro de publication internationale: WO 2020/201034

(56) Documents cités:
- EP-A2- 1 895 124
- WO-A1-2018/015659
- FR-A1- 3 054 856
- US-A- 5 370 427
- US-A1- 2016 245 180

## Description

La présente invention se rapporte au domaine des systèmes de refroidissement de turboréacteur pour aéronef.

Un aéronef est propulsé par un ou plusieurs ensembles propulsifs comprenant chacun un turboréacteur logé dans une nacelle. Chaque ensemble propulsif est rattaché à l'aéronef par un mât situé généralement sous ou sur une aile ou au niveau du fuselage de l'aéronef. Une nacelle selon l'art antérieur est divulguée dans le document WO2018/015659.

Une nacelle présente généralement une structure tubulaire comprenant une section amont comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

En outre, une nacelle comprend usuellement une structure externe comprenant une partie fixe et une partie mobile (moyens d'inversion de poussée), et une structure interne fixe, dite Inner Fixed Structure (IFS), concentrique de la structure externe. La structure interne fixe entoure le coeur du turboréacteur en arrière de la soufflante. Ces structures externe et interne définissent une veine annulaire d'écoulement, encore appelée veine secondaire, visant à canaliser un flux d'air froid, dit secondaire, qui circule à l'extérieur du turboréacteur.

La structure externe comporte un carénage externe définissant une surface aérodynamique externe, destinée à être au contact d'un flux d'air externe, et un carénage interne définissant une surface aérodynamique interne, destinée à être au contact du flux d'air secondaire. Les carénages interne et externe sont reliés en amont par une paroi de bord d'attaque formant une lèvre d'entrée d'air.

Les moyens d'inversion de poussée permettent de rediriger vers l'avant de l'ensemble propulsif tout ou partie du flux d'air froid circulant dans la veine secondaire de la nacelle de manière à créer une contre-poussée contribuant au freinage de l'aéronef.

Par moyen d'inversion de poussée on entend un inverseur de poussée.

Un tel inverseur de poussée comprend des structures mobiles d'inversion de poussée, généralement deux structures mobiles d'inversion de poussée, portés par la nacelle pour se déplacer entre une position de fermeture (jet direct) dans laquelle l'inverseur de poussée est inactif, et une position d'ouverture (jet inverse) dans laquelle l'inverseur de poussée est actif, c'est-à-dire qu'il renvoie au moins une partie du flux d'air froid dans la direction inverse au flux généré par le turboréacteur. On connaît en particulier des inverseurs de poussée dont les structures mobiles se déplacent en translation suivant une direction axiale du turboréacteur lors de leur passage en position d'ouverture. De tels inverseurs sont connus sous le nom d'inverseur à cascades ou d'inverseur à grilles.

Dans la position de jet inverse, l'inverseur de poussée renvoie au moins une partie du flux d'air froid dans la direction inverse au flux généré par le turboréacteur.

De manière générale, le turboréacteur comprend un ensemble de pales (compresseur et éventuellement soufflante ou hélice non carénée) entraînées en rotation par un générateur de gaz à travers un ensemble de moyens de transmission.

Un système de distribution d'un lubrifiant est prévu dans le turboréacteur pour assurer une bonne lubrification de ces moyens de transmission et les refroidir.

Le lubrifiant est de l'huile. Dans la suite de la description, on emploiera indifféremment les termes lubrifiant et huile.

Un système de refroidissement comportant au moins un échangeur de chaleur permet de refroidir le lubrifiant.

Il existe des systèmes de refroidissement comportant un échangeur air/huile utilisant de l'air froid prélevé dans la veine secondaire de la nacelle ou dans un des premiers étages de compresseur pour refroidir l'huile du turboréacteur. Un tel échangeur est un échangeur à ailettes. Il comporte des ailettes dans le flux d'air froid qui perturbent l'écoulement du flux d'air dans la veine secondaire ou dans le compresseur, ce qui entraîne des pertes de charges (traînée), et donc des pertes de performances pour l'aéronef en termes de consommation de carburant (paramètre FB (Fuel Burn)).

Il existe également des systèmes de refroidissement comportant un échangeur air/huile utilisant de l'air froid prélevé à l'extérieur de la nacelle ou dans la veine secondaire par une écope disposée respectivement sur le carénage externe ou interne de la nacelle, l'air froid étant mis en circulation à travers l'échangeur et pouvant servir au dégivrage de la nacelle, une fois réchauffé par le lubrifiant, par circulation dans des conduits disposés au contact des parois de la structure externe de la nacelle, par exemple au niveau de la lèvre d'entrée d'air. Un tel système de refroidissement permet un meilleur contrôle des énergies thermiques échangées, mais la présence d'écopes dans le carénage externe ou interne de la nacelle entraîne une perte des performances aérodynamiques, de la même manière qu'un échangeur à ailettes, et donc des pertes de performances pour l'aéronef en termes de consommation de carburant (paramètre FB (Fuel Burn)).

Une solution connue afin de limiter les perturbations du flux d'air qui engendrent les pertes de performances en termes de consommation de carburant de l'aéronef, consiste à fournir un système de refroidissement comportant un échangeur de chaleur, dit source chaude, entre un fluide caloporteur et l'huile moteur, et un échangeur de chaleur, dit source froide, entre le fluide caloporteur et de l'air. Un tel système de refroidissement comporte un conduit de circulation du fluide caloporteur en circuit fermé. Plus particulièrement, le conduit de circulation du fluide caloporteur comporte une portion disposée dans la nacelle au contact du carénage externe et/ou interne, ladite portion formant l'échangeur de chaleur source froide. On parle d'échangeur surfacique. Encore plus particulièrement, la portion disposée dans la nacelle au contact du carénage interne et/ou externe comporte une pluralité de canaux disposés en parallèle, lesdits canaux étant formés par une double paroi du carénage interne et/ou externe. On parle alors d'échangeur structural.

Généralement les échangeurs source froide sont situés sur la partie fixe de la structure externe et/ou interne de la nacelle et/ou sur une partie fixe du turboréacteur de l'aeronef, telles que sur des capots du turboréacteur ou sur l'entrée d'air de la nacelle. Dans le but d'optimiser les performances de refroidissement du turboréacteur on cherche à utiliser d'autres surfaces d'échange pour refroidir le fluide caloporteur, telles que des surfaces de la partie mobile. Il est par exemple avantageux d'utiliser le bord de fuite situé à l'arrière des structures mobiles de l'inverseur de poussée.

La présente invention a ainsi notamment pour but de fournir une nacelle comprenant un système de refroidissement adapté pour suivre le mouvement relatif d'une surface mobile par rapport à une surface fixe.

A cet effet, l'invention a pour objet une nacelle de turboréacteur du type comportant un lubrifiant selon la revendication 1.

Grâce à la nacelle selon l'invention, les conduits d'entrée et de sortie de fluide caloporteur sont adaptés pour permettre un mouvement relatif entre deux échangeurs de chaleur disposés sur des surfaces mobiles l'une par rapport à l'autre. Ainsi l'échangeur source chaude peut être agencé sur une surface dite fixe de la nacelle ou du turboréacteur tandis que l'échangeur source froide est agencé sur une surface dite mobile de la nacelle, la surface mobile étant un inverseur de poussée.

Par surface mobile de la nacelle on entend une surface apte à réaliser un déplacement par rapport à une surface dite fixe de la nacelle et/ou par rapport à une surface dite fixe du turboréacteur.

Selon d'autres caractéristiques de l'invention, la nacelle de l'invention comporte l'une ou plusieurs des caractéristiques optionnelles suivantes.

Selon une caractéristique, l'échangeur source froide est un échangeur surfacique constitué par exemple par une portion du conduit de circulation de fluide caloporteur, disposée au contact du carénage interne et/ou externe de la nacelle.

Selon une caractéristique, les conduits d'entrée et de sortie de fluide caloporteur comportent au moins un dispositif déployable destiné à accommoder le mouvement relatif entre les deux échangeurs.

Selon un mode de réalisation, le dispositif déployable est un tube télescopique.

Le tube télescopique assure à la fois la fonction d'étanchéité dynamique vis-à-vis de la circulation du fluide caloporteur et également la fonction de guidage des conduits de circulation.

Selon une caractéristique, le tube télescopique est un tube télescopique comprenant plusieurs étages.

En variante, le tube télescopique est un tube télescopique comprenant un unique étage. On parle de tube télescopique mono-étage.

Selon une caractéristique, le tube télescopique est rigide.

Selon une caractéristique, le tube télescopique est en matériau métallique tel que l'acier inoxydable, l'inconel, l'aluminium ou le titane.

Selon une caractéristique, le tube télescopique est en matériau polymère tel que le polyétheréthercétone (PEEK), le polytétrafluoroéthylène (PTFE) ou en matériau thermoplastique.

Dans un autre mode de réalisation, le dispositif déployable est un dispositif à soufflet. Par dispositif à soufflet on entend un dispositif rétractable assurant une étanchéité du fluide caloporteur sans recours à des pièces mobiles les unes par rapport aux autres. Le dispositif à soufflet assure la fonction d'étanchéité sans nécessiter d'étanchéité dynamique vis-à-vis de la circulation du fluide caloporteur. En outre, le dispositif à soufflet est peu sensible aux écarts d'alignement entre les structures fixes et mobiles. Selon une caractéristique, le dispositif à soufflet est souple.

Selon une caractéristique, le dispositif à soufflet est flexible.

Selon une caractéristique, le dispositif à soufflet est en matériau métallique tel que l'acier inoxydable embouti.

Selon une caractéristique, le dispositif à soufflet est en matériau polymère tel que le polyétheréthercétone (PEEK), le polytétrafluoroéthylène (PTFE), le caoutchouc ou en matériau thermoplastique.

Avantageusement la nacelle comprend un système de guidage destiné à guider la mobilité du dispositif à soufflet.

La présence du dispositif de guidage permet d'éviter le flambage du soufflet.

Selon une caractéristique, le système de guidage est un tube comprenant au moins deux parties conçues pour coulisser l'une dans l'autre. Le tube peut être agencé à l'intérieur du dispositif à soufflet ou à l'extérieur du dispositif à soufflet.

Dans une variante, le système de guidage est de type rail/glissière.

Un système de guidage de type rail/glissière comporte un rail et une glissière qui coopèrent entre eux.

Dans un autre mode de réalisation, le dispositif déployable est un dispositif flexible apte à être enroulé sur lui-même et à se dérouler pour accommoder le mouvement relatif entre les deux échangeurs. Le dispositif déployable est enroulé au moyen d'un dispositif enrouleur.

Selon une caractéristique, le conduit enroulé est souple.

Selon une caractéristique, le conduit enroulé est flexible.

Selon une caractéristique, le conduit enroulé est en matériau polymère tel que le polytétrafluoroéthylène (PTFE). Le conduit peut être recouvert d'une gaine tressée en matériau métallique tel qu'en acier inoxydable ou non métallique telle que les gaines Nomex^{®}.

Selon l'invention, la nacelle comporte au moins un inverseur de poussée, et le système de refroidissement comporte un premier échangeur, dit échangeur source chaude, entre un fluide caloporteur et un lubrifiant pour turboréacteur, un deuxième échangeur, correspondant à l'échangeur source froide, entre le fluide caloporteur et de l'air,
le deuxième échangeur source froide étant mobile par rapport au premier échangeur source chaude et les conduits d'entrée et de sortie de fluide caloporteur étant extensibles et/ou flexibles pour permettre d'accommoder le mouvement relatif entre les deux échangeurs, l'échangeur source froide étant disposé dans l'inverseur de poussée.

Selon une caractéristique, l'échangeur source froide est un échangeur structural avec la nacelle.

Par échangeur structural on entend un échangeurfaisant partie intégrante de la nacelle, c'est-à-dire présentant des conduits de circulation du fluide caloporteur formés par une double paroi du carénage interne et/ou externe de la nacelle.

Par double paroi du carénage, on entend que au moins une partie de la paroi des conduits de circulation de fluide caloporteur est formée par le carénage externe ou interne de la nacelle.

D'autres caractéristiques et avantages de l'invention apparaîtront à la lecture de la description nullement limitative qui suit et des figures annexées qui illustrent de manière schématique plusieurs modes de réalisation d'une structure tubulaire selon l'invention :
[Fig. 1] est une vue schématique en perspective d'un ensemble propulsif avec inverseur de poussée comportant un système de refroidissement selon l'invention ;
[Fig. 2] est une vue schématique d'un système de refroidissement de turboréacteur selon l'invention ;
[Fig. 3] est une vue schématique d'un premier mode de réalisation d'un dispositif déployable du système de refroidissement de l'invention selon une première variante en position rétractée;
[Fig. 4] est une vue schématique du dispositif déployable de la figure 3 en position déployée;
[Fig. 5] est une vue schématique en coupe longitudinale du premier mode de réalisation du dispositif déployable du système de refroidissement de l'invention selon une deuxième variante en position rétractée;
[Fig. 6] est une vue schématique en coupe longitudinale du dispositif déployable de la figure 5 en position déployée;
[Fig. 7] est une vue schématique en coupe longitudinale d'un deuxième mode de réalisation du dispositif déployable du système de refroidissement de l'invention ; [Fig. 8] est une vue schématique en coupe longitudinale du deuxième mode de réalisation du dispositif déployable de la figure 7 comprenant un dispositif de guidage selon une première variante, en position rétractée ;
[Fig. 9] est une vue schématique en coupe longitudinale du deuxième mode de réalisation du dispositif déployable de la figure 8 en position déployée ;
[Fig. 10] est une vue schématique en coupe longitudinale du deuxième mode de réalisation du dispositif déployable de la figure 7 comprenant un dispositif de guidage selon une deuxième variante, en position retractée ;
[Fig. 11] est une vue schématique en coupe longitudinale du deuxième mode de réalisation du dispositif déployable de la figure 10 en position déployée;
[Fig. 12] est une vue schématique en coupe longitudinale du deuxième mode de réalisation du dispositif déployable de la figure 7 comprenant un dispositif de guidage selon une troisième variante en position retractée;
[Fig. 13] est une vue schématique en coupe longitudinale du deuxième mode de réalisation du dispositif déployable de la figure 12 en position retractée;
[Fig. 14] est une vue schématique en coupe longitudinale d'un troisième mode de réalisation d'un dispositif déployable du système de refroidissement selon l'invention. Par souci de simplification, les éléments identiques sont repérés par des signes de référence identiques sur l'ensemble des figures.

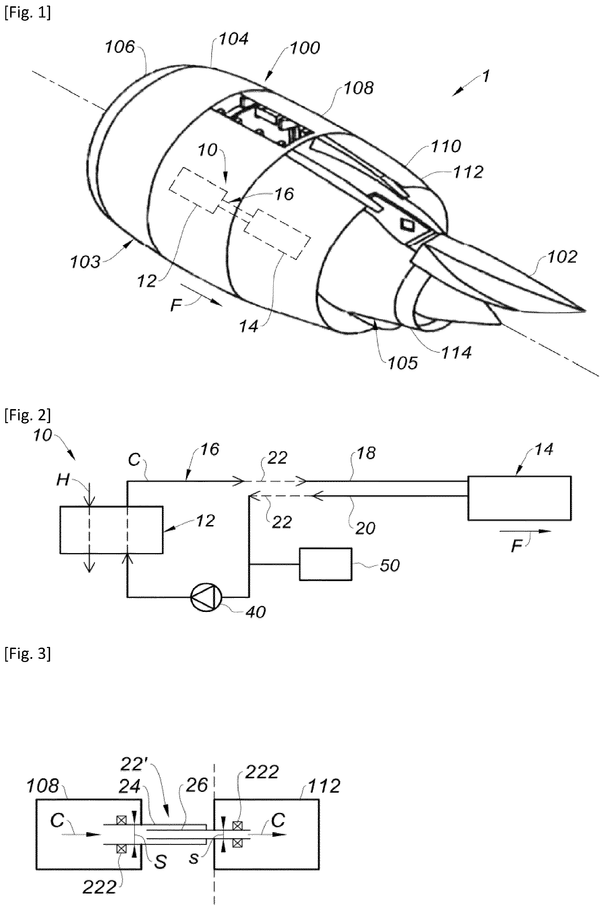

La figure 1 représente un ensemble propulsif 1 d'aéronef. Cet ensemble propulsif 1 comprend une nacelle 100, un mât réacteur 102 et un turboréacteur (non représenté) logé dans la nacelle 100. Le mât réacteur 102 est destiné à être fixé à une aile (non représentée) ou au fuselage (non représenté) de l'aéronef.

La nacelle 100 présente une structure tubulaire comprenant une section amont 104 dotée d'une lèvre 106 formant une entrée d'air, une section médiane 108 destinée à entourer une soufflante de turboréacteur (non représenté), une section aval 110 comprenant un inverseur de poussée 112 et destinée à entourer la chambre de combustion du turboréacteur (non représenté), et une tuyère d'éjection 114 dont la sortie est située en aval du turboréacteur (non représenté).

En outre, la nacelle 100 comprend une structure externe 103, et une structure interne 105, dite Inner Fixed Structure (IFS), concentrique de la structure externe 103. Ces structures externe 103 et interne 105 définissent une veine annulaire d'écoulement, encore appelé veine secondaire, visant à canaliser un flux d'air froid F qui circule à l'extérieur du turboréacteur (non représenté).

L'inverseur de poussée 112 est représenté en position de jet direct. Il comporte un capot coulissant mobile en translation entre la position de jet direct et la position de jet inverse (figures 3 à 14).

La nacelle 100 comprend un système de refroidissement 10 du turboréacteur (non représenté). Le système de refroidissement 10 comporte un premier échangeur 12, dit échangeur source chaude, entre un fluide caloporteur C (figure 2) et un lubrifiant H (figure 2) du turboréacteur, un deuxième échangeur 14, dit échangeur source froide, entre le fluide caloporteur C (figure 2) et de l'air F, et un conduit de circulation 16 de fluide caloporteur C (figure 2).

L'échangeur source froide 14 est disposé sur le capot coulissant de l'inverseur de poussée 112 et l'échangeur source chaude 12 est disposé sur la section médiane 108. Ainsi, l'échangeur source froide 14 est mobile par rapport à l'échangeur source chaude 12.

Selon un mode de réalisation non représenté, l'échangeur source chaude 12 peut être disposé sur une surface du turboréacteur.

L'échangeur source froide 14 est un échangeur surfacique structural avec le capot coulissant de l'inverseur de poussée 112. Il comporte une pluralité de conduits (non représentés) formés par une double paroi du capot coulissant de l'inverseur de poussée 112.

Comme illustré sur la figure 2, le conduit de circulation 16 est extensible de sorte à accommoder le mouvement relatif entre les deux échangeurs 12, 14 lors du passage de la position de jet direct à la position de jet inverse du capot coulissant.

Le conduit de circulation 16 extensible est conçu pour effectuer une course de translation entre 300 mm et 1000 mm.

Le système de refroidissement 10 est conçu pour supporter une pression de service comprise entre 0 et 10 bars.

La figure 2 représente le système de refroidissement 10 comportant l'échangeur source chaude 12 entre le fluide caloporteur C et le lubrifiant H, l'échangeur source froide 14, entre le fluide caloporteur C et de l'air F, et le conduit de circulation 16 de fluide caloporteur C.

Le conduit de circulation 16 de fluide caloporteur C est en circuit fermé. Il comporte un conduit d'entrée 18 de fluide caloporteur C dans l'échangeur source froide 14, et un conduit de sortie 20 de fluide caloporteur de l'échangeur source froide 14. Les conduits d'entrée et de sortie forment une boucle de recirculation entre l'échangeur source froide et l'échangeur source chaude.

Les conduits d'entrée 18 et de sortie 20 de fluide caloporteur comportent au moins un dispositif déployable 22 destiné à accommoder le mouvement relatif entre les deux échangeurs 12, 14.

Le circuit de refroidissement 10 comprend au moins une pompe de circulation 40 destinée à faire circuler le fluide caloporteur C.

Le circuit de refroidissement 10 comprend également un vase d'expansion 50 destiné à accommoder la variation de volume de fluide caloporteur C sous l'effet de la température.

Le vase d'expansion 50 est un réservoir fermé. Ainsi, la pression dans le vase d'expansion 50 est directement liée au volume occupé par le fluide caloporteur dans le vase d'expansion. Cette caractéristique permet avantageusement de maîtriser une pression maximale et/ou minimale dans certaines portions du conduit de circulation 16 du fluide caloporteur en jouant uniquement sur la capacité (volume) du vase d'expansion 50.

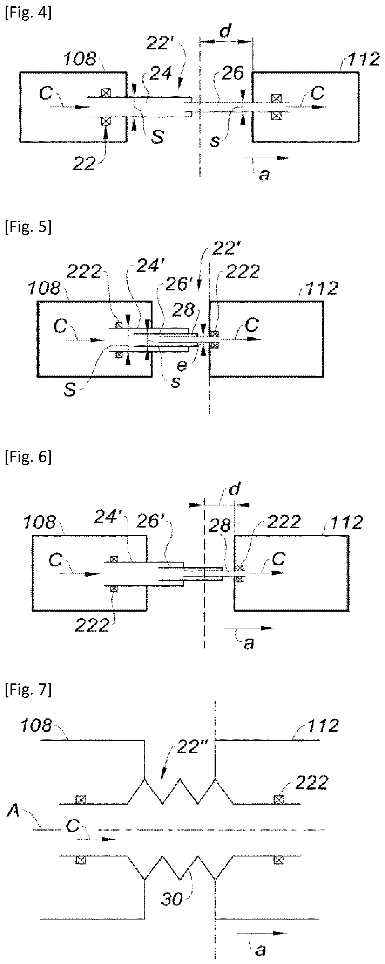

Les figures 3 et 4 représentent le dispositif déployable 22' selon une première variante d'un premier mode de réalisation. Dans ce premier mode de réalisation, le dispositif déployable 22' est un tube télescopique et plus précisément, dans cette première variante, le tube télescopique 22' présente un unique étage en position rétractée (figure 3) et en position déployée (figure 4) entre une section médiane 108 et un capot coulissant d'un inverseur de poussée 112 d'une nacelle.

Le tube télescopique 22' comporte un premier canal 24 dont l'une des extrémités est fixée à la section médiane 108 au moyen d'une fixation mécanique 222 et un deuxième canal 26 dont l'une des extrémités est fixée au capot coulissant de l'inverseur de poussée 112 au moyen d'une fixation mécanique 222. Les fixations mécaniques 222 peuvent être de type rotule ou cadran. Le premier canal 24 présente une section S supérieure à la section « s » du deuxième canal 26 de sorte que le deuxième canal 26 est adapté pour se rétracter dans le premier canal 24.

En fonctionnement, le deuxième canal 26 est rétracté dans le premier canal 24 lorsque l'inverseur de poussée 112 est en position de jet direct (figure 3), et le deuxième canal 26 est déployé en dehors du premier canal 24 lorsque l'inverseur de poussée 112 est en position de jet inverse (figure 4) suivant un écartement « d » formé par le déplacement du capot coulissant de l'inverseur de poussée 112. Le deuxième canal 26 est mobile en translation suivant la direction de la flèche « a » correspondant à la direction de translation de l'inverseur de poussée 112. Ainsi, le système de refroidissement 10 accommode le déplacement de l'échangeur source froide 14 par rapport à l'échangeur source chaude 12 et permet au fluide caloporteur C de circuler dans le tube télescopique 22' pendant les changements de position de l'inverseur de poussée.

Les figures 5 et 6 représentent le dispositif déployable 22' selon une deuxième variante du premier mode de réalisation, dans laquelle le dispositif déployable 22' est un tube télescopique à plusieurs étages. Dans cet exemple le dispositif déployable 22' est un tube télescopique à trois étages, en position rétractée (figure 5) et en position déployée (figure 6) entre la section médiane 108 et le capot coulissant de l'inverseur de poussée 112 d'une nacelle.

Le tube télescopique comporte un premier canal 24' dont l'une des extrémités est fixée à la section médiane 108 au moyen d'une fixation mécanique 222, un deuxième canal 26' et un troisième canal 28 dont l'une des extrémités est fixée au capot coulissant de l'inverseur de poussée 112 au moyen d'une fixation mécanique 222. Les fixations mécaniques 222 peuvent être de type rotule ou cadran. Le premier canal 24' présente une section S' supérieure à la section « s' » du deuxième canal 26' de sorte que le deuxième canal 26' soit adapté pour se rétracter dans le premier canal 24', et le deuxième canal 26' présente une section « s' » supérieure à la section « e » du troisième canal 28 de sorte que le troisième canal 28 soit adapté pour se rétracter dans le deuxième canal 26'.

En fonctionnement, le deuxième canal 26' est rétracté dans le premier canal 24' et le troisième canal 28 est rétracté dans le deuxième canal 26' lorsque l'inverseur de poussée 112 est en position de jet direct (figure 5), et le deuxième canal 26' est déployé en dehors du premier canal 24' et le troisième canal 28 est déployé en dehors du deuxième canal 26' lorsque l'inverseur de poussée 112 est en position de jet inverse (figure 6) suivant un écartement « d » formé par le déplacement du capot mobile de l'inverseur de poussée 112. Les deuxième 26' et troisième 28 canaux sont mobiles en translation suivant la direction de la flèche « a » correspondant à la direction de translation de l'inverseur de poussée 112. Ainsi, le système de refroidissement 10 accommode le déplacement de l'échangeur source froide 14 par rapport à l'échangeur source chaude 12 et permet au fluide caloporteur C de circuler dans le tube télescopique pendant les changements de position de l'inverseur de poussée.

La figure 7 représente le dispositif déployable 22" selon un deuxième mode de réalisation. Dans ce deuxième mode de réalisation, le dispositif déployable 22" est un dispositif à soufflet.

Le dispositif à soufflet 22" présente une structure en accordéon comportant une pluralité de sections 30. Une extrémité du dispositif à soufflet 22" est fixée à la section médiane 108 au moyen d'une fixation mécanique 222 et l'extrémité opposée du dispositif à soufflet 22" est fixée au capot coulissant de l'inverseur de poussée 112 au moyen d'une fixation mécanique 222.

Le dispositif à soufflet 22" présente un axe de symétrie de révolution A.

En fonctionnement, le dispositif à soufflet 22" est rétracté lorsque l'inverseur de poussée 112 est en position de jet direct, et déployé lorsque l'inverseur de poussée 112 est en position de jet inverse.

Le déploiement du dispositif à soufflet 22" suit un déplacement en translation suivant la direction de la flèche « a » correspondant à la direction de translation de l'inverseur de poussée 112.

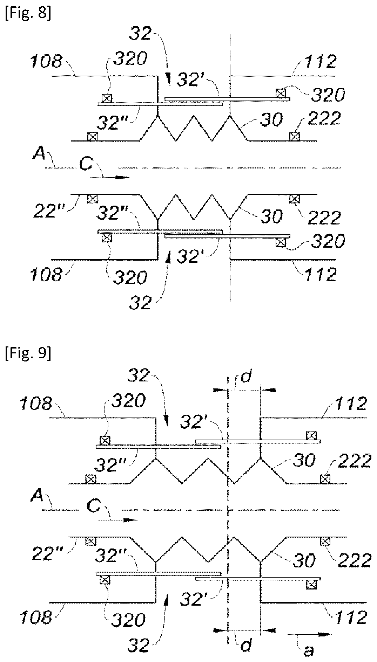

Les figures 8 et 9 représentent le dispositif à soufflet 22" et un dispositif de guidage 32 selon une première variante.

Le dispositif de guidage 32 permet de guider le déploiement et la rétractation du dispositif à soufflet 22" et d'empêcher le flambage du dispositif à soufflet lors du passage de l'inverseur en position jet direct. Le dispositif de guidage 32 est un tube comprenant au moins deux parties, dites première partie 32' et deuxième partie 32", conçues pour coulisser l'une dans l'autre.

La première partie 32' présente une extrémité fixée au capot coulissant de l'inverseur de poussée 112 au moyen d'une fixation mécanique 320 et une extrémité opposée fixée de manière coulissante à la deuxième partie 32".

La deuxième partie 32" présente une extrémité fixée au capot mobile de l'inverseur de poussée 112 au moyen d'une fixation mécanique 320 et une extrémité opposée fixée de manière coulissante à la première partie 32'.

Ainsi, la première partie 32' et la deuxième partie 32" sont conçues pour coulisser l'une dans l'autre.

Dans cette première variante, le dispositif à soufflet 22" est agencé à l'intérieur du tube 32.

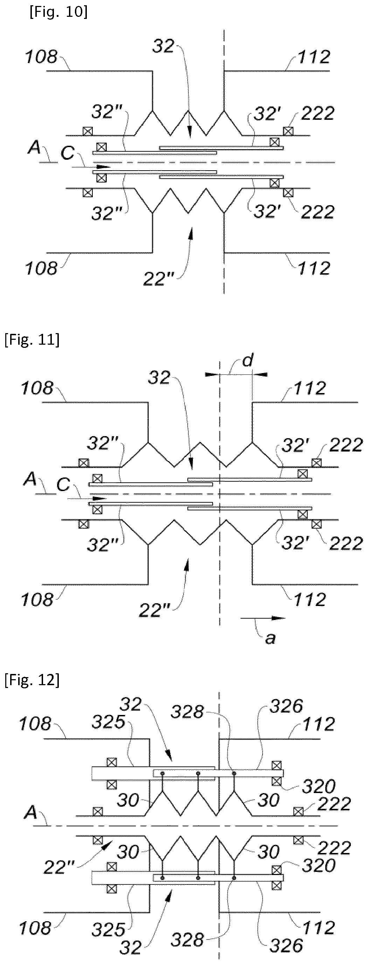

Dans une deuxième variante, le tube 32 tel que décrit précédemment est agencé à l'intérieur du dispositif à soufflet 22" (figures 10 et 11).

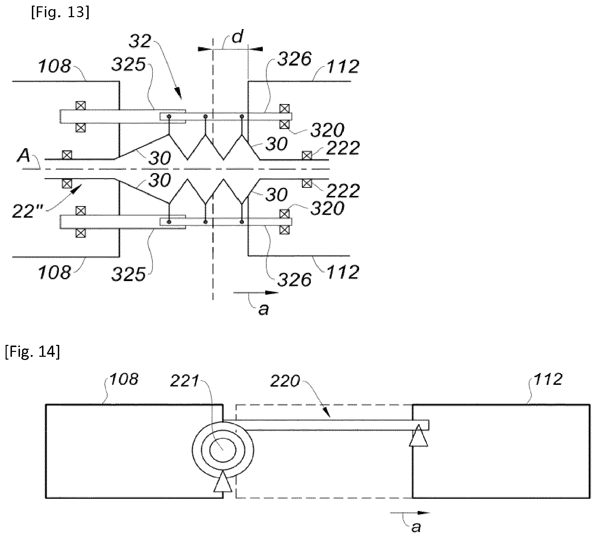

Les figures 12 et 13 illustrent le dispositif à soufflet 22" et un dispositif de guidage 32 selon une troisième variante de réalisation. Dans cette variante, le dispositif de guidage 32 comprend une glissière 326 et un rail 325.

Chaque section 30 du dispositif à soufflet 22" est reliée à la glissière 326. La glissière 326 est rétractée dans le rail 325 lorsque l'inverseur de poussée 112 est en position de jet direct (figure 12) est déployée en dehors du rail 325 lorsque l'inverseur de poussée 112 est en position de jet inverse (figure 13) suivant un écartement « d » formé par le déplacement du capot mobile de l'inverseur de poussée 112. Le dispositif à soufflet et le dispositif de guidage s'étendent en translation suivant la direction de la flèche « a » correspondant à la direction de translation de l'inverseur de poussée.

Dans une variante non représentée, seulement certaines sections 30 du dispositif à soufflet 22" sont reliées à la glissière 326.

La figure 14 représente le dispositif déployable 220 selon un troisième mode de réalisation. Dans ce troisième mode de réalisation, le dispositif déployable 220 est un conduit flexible apte à être enroulé sur lui-même et à se dérouler pour accommoder le mouvement relatif entre les deux échangeurs 12, 14.

En fonctionnement, le conduit flexible 220 est enroulé lorsque l'inverseur de poussée 112 est en position de jet direct, et déroulé lorsque l'inverseur de poussée 112 est en position de jet inverse. Le conduit flexible 220 est enroulé au moyen d'un dispositif enrouleur 221. Le guidage du conduit flexible 220 est assuré par la mise en tension du conduit flexible 220 au niveau du dispositif enrouleur 221 et permet un enroulement optimal du conduit flexible 220 lors du passage de l'inverseur de poussée en jet direct. Dans les différents modes de réalisation qui viennent d'être décrits, la nacelle présente des conduits d'entrée et de sortie extensibles qui permettent d'accomoder le mouvement relatif d'une surface mobile par rapport à une surface fixe.

Dans une variante non représentée le conduit de circulation est flexible de sorte à accommoder le mouvement relatif entre les deux échangeurs lors du passage de la position de jet direct à la position de jet inverse du capot coulissant.

Bien évidemment, l'invention n'est pas limitée aux exemples qui viennent d'être décrits et de nombreux aménagements peuvent être apportés à ces exemples sans sortir du cadre de l'invention.

## Revendications

1. Nacelle (100) de turboréacteur du type comportant un lubrifiant (H), la nacelle (100) comportant une structure externe (103) et une structure interne (105) définissant une veine annulaire d'écoulement d'un flux d'air froid dit secondaire, la structure externe (103) comportant un carénage externe définissant une surface aérodynamique externe et un carénage interne définissant une surface aérodynamique interne, les carénages externe et interne étant reliés en amont par une paroi de bord d'attaque formant une lèvre d'entrée d'air, ladite nacelle comprenant :
- un inverseur de poussée, et
- un système de refroidissement comportant :
- un premier échangeur (12), dit échangeur source chaude, entre un fluide caloporteur et un lubrifiant pour turboréacteur,
- au moins un deuxième échangeur (14), dit échangeur source froide, entre un fluide caloporteur (C) et de l'air (F),
- un conduit d'entrée (18) de fluide caloporteur dans l'échangeur source froide (12),
- un conduit de sortie (20) de fluide caloporteur de l'échangeur source froide (12) les conduits d'entrée (18) et de sortie (20) étant destinés à former une boucle de recirculation entre l'échangeur source froide (14) et l'échangeur source chaude (12), l'échangeur source froide (14) étant mobile par rapport à l'échangeur source chaude (12) et disposé dans l'inverseur de poussée, et les conduits d'entrée (18) et de sortie (20) de fluide caloporteur étant extensibles et/ou flexibles pour permettre d'accommoder le mouvement relatif entre les deux échangeurs (12, 14).

2. Nacelle (100) selon la revendication 1 **caractérisée en ce que** l'échangeur (14) source froide est un échangeur surfacique.

3. Nacelle (100) selon la revendication 1 ou 2 **caractérisée en ce que** les conduits d'entrée (18) et de sortie (20) de fluide caloporteur comportent au moins un dispositif déployable (22, 22', 22", 220) destiné à accommoder le mouvement relatif entre les deux échangeurs (12, 14).

4. Nacelle (100) selon la revendication 3 **caractérisée en ce que** le dispositif déployable est un tube télescopique (22').

5. Nacelle (100) selon la revendication 4 **caractérisée en ce que** le tube télescopique (22') est un tube télescopique comprenant plusieurs étages.

6. Nacelle (100) selon la revendication 4 **caractérisée en ce que** le tube télescopique (22') est un tube télescopique comprenant un unique étage.

7. Nacelle (100) selon la revendication 3 **caractérisée en ce que** le dispositif déployable est un dispositif à soufflet (22").

8. Nacelle (100) selon la revendication 7 **caractérisée en ce qu'**il comprend un système de guidage (32) destiné à guider la mobilité du dispositif à soufflet.

9. Nacelle (100) selon la revendication 8 **caractérisée en ce que** le système de guidage (32) est un tube comprenant au moins deux parties (32', 32") conçues pour coulisser l'une dans l'autre.

10. Nacelle (100) selon la revendication 8 **caractérisée en ce que** le système de guidage (32) est de type rail/glissière.

11. Nacelle (100) selon la revendication 3 **caractérisée en ce que** le dispositif déployable est un conduit flexible (220) apte à être enroulé sur lui-même et à se dérouler pour accommoder le mouvement relatif entre les deux échangeurs (12, 14).

12. Nacelle (100) selon l'une quelconques des revendications précédentes **caractérisée en ce que** l'échangeur source froide est un échangeur structural avec la nacelle.

## Patentansprüche

1. Gondel (100) einer Strahlturbine des Typs, der einen Schmierstoff (H) beinhaltet, wobei die Gondel (100) eine äußere Struktur (103) und eine innere Struktur (105) beinhaltet, die eine ringförmige Durchflussader eines Luftstroms, sekundäre genannt, definieren, wobei die äußere Struktur (103) eine äußere Verkleidung beinhaltet, die eine äußere aerodynamische Oberfläche definiert, und eine innere Verkleidung, die eine innere aerodynamische Oberfläche definiert, wobei die äußere und die innere Verkleidung stromaufwärts durch eine Anströmkantenwand verbunden sind, die eine Lufteinlasslippe bildet, wobei die Gondel umfasst:
- eine Schubumkehrung, und
- ein Kühlsystem, beinhaltend:
- einen ersten Tauscher (12), Heißquellentauscher genannt, zwischen einem Wärmeträgerfluid und einem Schmierstoff für eine Strahlturbine,
- mindestens einen zweiten Tauscher (14), Kaltquellentauscher genannt, zwischen einem Wärmeträgerfluid (C) und der Luft (F),
- eine Einlassleitung (18) des Wärmeträgerfluids in den Kaltquellentauscher (12),
- eine Auslassleitung (20) des Wärmeträgerfluids des Kaltquellentauschers (12),
wobei die Einlass- (18) und Auslassleitungen (20) dazu bestimmt sind, eine Umwälzschleife zwischen dem Kaltquellentauscher (14) und dem Heißquellentauscher (12) zu bilden, wobei der Kaltquellentauscher (14) relativ zum Heißquellentauscher (12) beweglich ist, und in der Schubumkehrung angeordnet ist, und die Einlass- (18) und Auslassleitungen (20) des Wärmeträgerfluids dehnbar und/oder flexibel sind, um die Relativbewegung zwischen den zwei Tauschern (12, 14) aufzunehmen.

2. Gondel (100) nach Anspruch 1, **dadurch gekennzeichnet, dass** der Kaltquellentauscher (14) ein Oberflächentauscher ist.

3. Gondel (100) nach Anspruch 1 oder 2, **dadurch gekennzeichnet, dass** die Einlass- (18) und Auslassleitungen (20) des Wärmeträgerfluids mindestens eine ausfahrbare Vorrichtung (22, 22', 22", 220) beinhalten, die dazu bestimmt ist, die Relativbewegung zwischen den zwei Tauschern (12, 14) aufzunehmen.

4. Gondel (100) nach Anspruch 3, **dadurch gekennzeichnet, dass** die ausfahrbare Vorrichtung ein Teleskoprohr (22') ist.

5. Gondel (100) nach Anspruch 4, **dadurch gekennzeichnet, dass** das Teleskoprohr (22') ein Teleskoprohr ist, das mehrere Stufen umfasst.

6. Gondel (100) nach Anspruch 4, **dadurch gekennzeichnet, dass** das Teleskoprohr (22') ein Teleskoprohr ist, das eine einzige Stufe umfasst.

7. Gondel (100) nach Anspruch 3, **dadurch gekennzeichnet, dass** die ausfahrbare Vorrichtung eine Faltenbalgvorrichtung (22") ist.

8. Gondel (100) nach Anspruch 7, **dadurch gekennzeichnet, dass** sie ein Führungssystem (32) umfasst, das bestimmt ist, um die Beweglichkeit der Faltenbalgvorrichtung zu führen.

9. Gondel (100) nach Anspruch 8, **dadurch gekennzeichnet, dass** das Führungssystem (32) ein Rohr ist, das mindestens zwei Teile (32', 32") umfasst, die dazu ausgelegt sind, sich ineinander zu verschieben.

10. Gondel (100) nach Anspruch 8, **dadurch gekennzeichnet, dass** das Führungssystem (32) vom Typ Schiene/Schiebeführung ist.

11. Gondel (100) nach Anspruch 3, **dadurch gekennzeichnet, dass** die ausfahrbare Vorrichtung eine flexible Leitung (220) ist, die dazu geeignet ist, sich um sich selbst aufzuwickeln und abzuwickeln, um die Relativbewegung zwischen den zwei Tauschern (12, 14) aufzunehmen.

12. Gondel (100) nach einem der vorhergehenden Ansprüche, **dadurch gekennzeichnet, dass** der Kaltquellentauscher ein strukturaler Tauscher mit der Gondel ist.

## Claims

1. A nacelle (100) of a turbojet engine of the type including a lubricant (H), the nacelle (100) including an outer structure (103) and an inner structure (105) defining an annular flow path for the flowing of a so-called secondary cold air flow, the outer structure (103) including an outer fairing defining an outer aerodynamic surface and an inner fairing defining an inner aerodynamic surface, the outer and inner fairings being connected upstream by a leading edge wall forming an air inlet lip, said nacelle comprising:
- a thrust reverser, and
- a cooling system including:
- a first exchanger (12), called a hot source exchanger, between a heat transfer fluid and a lubricant for a turbojet engine,
- at least one second exchanger (14), called a cold source exchanger, between a heat transfer fluid (C) and air (F),
- an inlet conduit (18) for heat transfer fluid into the cold source exchanger (12),
- an outlet conduit (20) for heat transfer fluid from the cold source exchanger (12)
the inlet (18) and outlet (20) conduits being intended to form a recirculation loop between the cold source exchanger (14) and the hot source exchanger (12), the cold source exchanger (14) being movable relative to the hot source exchanger (12) and arranged in the thrust reverser, and the heat transfer fluid inlet (18) and outlet (20) conduits being extensible and/or flexible to accommodate the relative movement between the two exchangers (12, 14).

2. The nacelle (100) according to claim 1 **characterized in that** the cold source exchanger (14) is a surface exchanger.

3. The nacelle (100) according to claim 1 or 2 **characterized in that** the heat transfer fluid inlet (18) and outlet (20) conduits include at least one deployable device (22, 22', 22", 220) intended to accommodate the relative movement between the two exchangers (12, 14).

4. The nacelle (100) according to claim 3 **characterized in that** the deployable device is a telescopic tube (22').

5. The nacelle (100) according to claim 4 **characterized in that** the telescopic tube (22') is a telescopic tube comprising several stages.

6. The nacelle (100) according to claim 4 **characterized in that** the telescopic tube (22') is a telescopic tube comprising a single stage.

7. The nacelle (100) according to claim 3 **characterized in that** the deployable device is a bellows device (22").

8. The nacelle (100) according to claim 7 **characterized in that** it comprises a guiding system (32) intended to guide the mobility of the bellows device.

9. The nacelle (100) according to claim 8 **characterized in that** the guide system (32) is a tube comprising at least two parts (32', 32") designed to slide one inside the other.

10. The nacelle (100) according to claim 8 **characterized in that** the guide system (32) is of the rail/slide type.

11. The nacelle (100) according to claim 3 **characterized in that** the deployable device is a flexible conduit (220) capable of being wound on itself and unfold to accommodate the relative movement between the two exchangers (12, 14).

12. The nacelle (100) according to any one of the preceding claims **characterized in that** the cold source exchanger is a structural exchanger with the nacelle.
